(19) Europäisches Patentamt
European Patent Office
Office européen des brevets

(11) EP 2 749 617 A1

(12) EUROPEAN PATENT APPLICATION

(43) Date of publication:
**02.07.2014 Bulletin 2014/27**

(21) Application number: **13198397.5**

(22) Date of filing: **19.12.2013**

(51) Int Cl.:
*C09J 7/02* (2006.01) *B32B 7/12* (2006.01)
*B32B 27/08* (2006.01) *F16J 15/10* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.12.2012 US 201261745853 P**

(71) Applicant: **NITTO DENKO CORPORATION**
**Osaka 567 (JP)**

(72) Inventors:
- **Kabutoya, Ryuuichi**
**Ibaraki-shi, Osaka 567-8680 (JP)**
- **Muta, Shigeki**
**Ibaraki-shi, Osaka 567-8680 (JP)**
- **Suzuki, Masatoshi**
**Ibaraki-shi, Osaka 567-8680 (JP)**
- **Hirose, Tetsuya**
**Ibaraki-shi, Osaka 567-8680 (JP)**
- **Inokuchi, Shinji**
**Ibaraki-shi, Osaka 567-8680 (JP)**

(74) Representative: **Grünecker, Kinkeldey, Stockmair & Schwanhäusser**
**Leopoldstrasse 4**
**80802 München (DE)**

(54) **Sealing sheet**

(57) The present invention provides a sealing sheet mainly composed of an adhesive sheet composed of a core film having a water vapor transmission rate of less than 7.5 g/100 sq. in 24 hr as measured by a method according to JIS Z 0208, and a Relaxation rate of not less than 10% as measured by the following bending-stress relaxation rate measurement test, and an adhesive layer formed on both surfaces of the core film:
[bending-stress relaxation rate measurement test]
(1) a core film is cut into a tape (width 20 mm, length 100 mm), the tape is rolled to form a loop with one surface thereof being inside, one end (10 mm) of the rolled tape is laid on top of the other and fixed with an adhesive tape to give a loop sample,
(2) the loop sample is put on a balance, and pressed with a flat plate surface of the jig such that the distance between the flat plate surface and the balance is 20 mm to deflect the loop sample, and
(3) from the start of pressing, the weight of the loop sample is measured by the balance, a ratio of the weight of the loop sample at 60 seconds from the start of pressing to the weight of the loop sample at 0 second therefrom is calculated based on the following calculation formula, and the obtained rate is taken as the relaxation rate.

$$\text{relaxation rate } (\%) = (1-(F_{60}-W)/(F_0-W))\times 100$$

$F_0$: weight at 0 second from the start of pressing
$F_{60}$: weight at 60 seconds from the start of pressing
W: sample weight

EP 2 749 617 A1

FIG.1

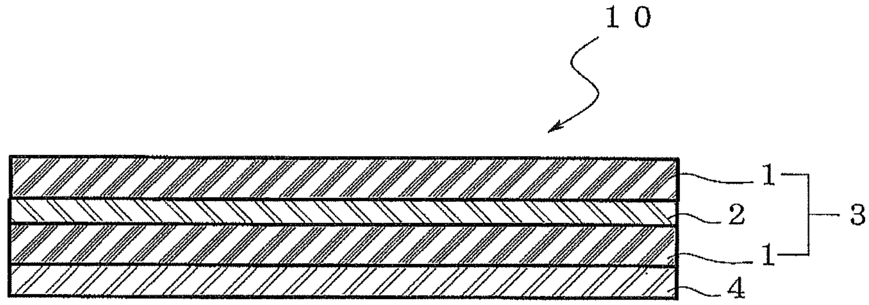

## Description

### TECHNICAL FIELD OF THE INVENTION

The present invention relates to a sealing sheet having superior resistance to moisture permeation and superior in level difference absorbability.

### BACKGROUND OF THE INVENTION

For example, since electrical components, electric wiring and the like are set under the floor panel of aircrafts, it is necessary to shut off the moisture and humidity from the floor panel so that the moisture will not penetrate under the floor panel. However, since the floor panel is fixed onto the body frame by bolting, it is difficult to completely prevent moisture permeation from the clearance between a bolt and a screw hole formed for bolting a floor panel, even when the bolt is screwed into the screw hole. For this reason, a sealing sheet is adhered to a floor panel to shut off the floor panel from water and humidity.

In addition, an antenna to aid communication between aircrafts and distant places is set on the outer surface of the body wall (outer board) of the aircrafts. Many of such antennas have a plate-like fixing board having an electric connector protruding from one surface thereof. The surface of the fixing board having the protruding electric connector is superposed on the outer face of the outer board, the connector is inserted into the inside of an aircraft from the hole formed on the outer board of the aircraft, and connected to an appropriate electric circuit in the aircraft. In this case, the fixing board of the antenna is fixed removably with a bold on the outer board of the aircraft, where the outer board and the antenna fixing board are fixed via a gasket to block water and humidity from the outside from the fixed part. For example, US2004/0070156A1 proposes a material consisting of an adhesive sheet wherein an adhesive layer of a flexible polyurethane gel is formed on both the front and the back of a substrate film as this kind of gasket.

### SUMMARY OF THE INVENTION

For a sealing sheet and a gasket to show a sufficiently high seal performance, they need to have level difference absorbability to follow the concaves and convexes (level differences) on the surface of an adherend having such concaves and convexes, and further need to have superior resistance to moisture permeation.
However, the gasket proposed in the aforementioned US2004/0070156 A1 and conventional sealing sheets do not show sufficient level difference absorbability and resistance to moisture permeation, and have a room for improvement.

In view of the above-mentioned situation, the present invention aims to provide a sealing sheet simultaneously affording resistance to moisture permeation and superior level difference absorbability.

The present inventors have conducted intensive studies in an attempt to solve the aforementioned problems and found that a sealing sheet mainly composed of an adhesive sheet comprising a core film having a particular water vapor transmission rate and a particular Relaxation rate, and an adhesive layer formed on both surfaces of the core film shows superior resistance to moisture permeation and superior level difference absorbability, which resulted in the completion of the present invention.

Accordingly, the present invention provides the following.

[1] A sealing sheet mainly composed of an adhesive sheet comprising a core film having a water vapor transmission rate of less than 7.5 g/100 sq. in 24 hr as measured by a method according to JIS Z 0208, and a Relaxation rate of not less than 10% as measured by the following bending-stress relaxation rate measurement test, and an adhesive layer formed on both surfaces of the core film:

[bending-stress relaxation rate measurement test]

(1) a core film is cut into a tape (width 20 mm, length 100 mm), the tape is rolled to form a loop with one surface thereof being inside, one end (10 mm) of the rolled tape is laid on top of the other and fixed with an adhesive tape to give a loop sample,
(2) the loop sample is put on a balance, and pressed with a flat plate surface of the jig such that the distance between the flat plate surface and the balance is 20 mm to deflect the loop sample, and
(3) from the start of pressing, the weight of the loop sample is measured by the balance, a ratio of the weight of the loop sample at 60 seconds from the start of pressing to the weight of the loop sample at 0 second therefrom is calculated based on the following calculation formula, and the obtained rate is taken as the relaxation rate.

$$\text{relaxation rate } (\%) = (1 - (F_{60} - W) / (F_0 - W)) \times 100$$

$F_0$: weight at 0 second from the start of pressing
$F_{60}$: weight at 60 seconds from the start of pressing
W: sample weight

[2] The sealing sheet of the above-mentioned [1], wherein the core film is a plastic film.
[3] The sealing sheet of the above-mentioned [1] or [2], wherein a substrate sheet is laminated on one surface of the adhesive sheet.
[4] The sealing sheet of the above-mentioned [3], wherein the substrate sheet is a fluororesin sheet.
[5] The sealing sheet of any one of the above-mentioned [1] - [4], wherein the adhesive layer comprises a polyoxyalkylene adhesive.
[6] The sealing sheet of any one of the above-mentioned [1] - [5], wherein the adhesive layer is a flame retardant-containing adhesive layer.
[7] The sealing sheet of the above-mentioned [6], wherein the flame retardant-containing adhesive layer is a cured product layer of a composition comprising the following components A - D.

A: a polyoxyalkylene polymer having at least one alkenyl group in one molecule
B: a compound containing two or more hydrosilyl groups on average in one molecule
C: a hydrosilylation catalyst
D: a flame retardant.

[8] The sealing sheet of the above-mentioned [6] or [7], wherein the flame retardant is a halogen-free flame retardant.
[9] The sealing sheet of the above-mentioned [8], wherein the halogen-free flame retardant is a phosphorus flame retardant.
[10] The sealing sheet of any one of the above-mentioned [1] - [9], wherein the adhesive layer comprises a tackifier resin.

BRIEF DESCRIPTION OF THE DRAWINGS

Fig. 1 is a schematic sectional view of the sealing sheet of the first embodiment of the present invention.
Fig. 2 is a schematic sectional view of the sealing sheet of the second embodiment of the present invention.
Fig. 3 is a schematic sectional view showing the sealing sheet of Fig. 1 during use (the first use form) together with a sealed object.
Fig. 4 is a schematic sectional view showing the sealing sheet of Fig. 2 during use (the first use form) together with a sealed object.
Fig. 5 is a schematic sectional view showing other use form (the second use form) together with a sealed object.
Fig. 6(A) - Fig. 6(C) are schematic views showing the production level difference of the sealing sheet shown in Fig. 1.
Fig. 7(A) is a schematic view of a roll shape of the sealing sheet of the present invention, and Fig. 7(B) is a partly-enlarged sectional view of the sealing sheet shown in Fig. 7 (A).
Fig. 8 explains a bending-stress relaxation rate measurement test.
Fig. 9 is a perspective view of jig 32 in Fig. 8.
Fig. 10(A) - Fig. 10(C) explain a level difference absorbability test.

In the Figures, 1 is a flame retardant-containing adhesive layer, 2 is a core film, 3 is a flame retardant adhesive sheet, 4 is a substrate sheet, 10, 11 are sealing sheets, and 20, 21 are sealed objects.

DETAILED DESCRIPTION OF THE INVENTION

The present invention is explained in the following by referring to preferable embodiments.
Fig. 1 is a schematic sectional view of the sealing sheet of the first embodiment of the present invention, and Fig. 2 is a schematic sectional view of the sealing sheet of the second embodiment of the present invention.
The sealing sheet of the present invention is, as shown in the sealing sheets 10, 11 in the first and the second embodiments, mainly composed of an adhesive sheet 3 having an adhesive layer 1 formed on both surfaces of a core

film 2.

The sealing sheet 10 of the first embodiment (Fig. 1) is a laminate of an adhesive sheet 3 comprising a core film 2 and an adhesive layer 1 formed on both surfaces of the core film 2, and a substrate sheet 4 formed on one side surface of the adhesive sheet 3, and the sealing sheet 11 of the second embodiment (Fig. 2) is composed solely of an adhesive sheet 3 comprising a core film 2 and an adhesive layer 1 formed on both surfaces of the core film 2.

Figs. 3, 4 are each a schematic sectional view showing the embodiments of the sealing sheets of Figs. 1, 2 during use. As shown in Figs. 3, 4, the sealing sheets 10, 11 of the present invention are used by adhering the adhesive face of the adhesive layer 1 of the adhesive sheet 3 to a sealed object 20.

In addition, as shown in Fig. 5, when sealing sheets 10, 11 interposed between the two sealed objects 20, 21 are used, an embodiment may be adopted, wherein the two objects to be sealed, which contain the sealing sheets 10, 11 interposed therebetween, are fixed by bolting (not shown).

[Adhesive sheet]

<Core film>

In the sealing sheet of the present invention, a core film having a water vapor transmission rate of less than 7.5 g/100 sq. in 24 hr as measured by a method according to JIS Z 0208 (hereinafter to be also simply referred to as "water vapor transmission rate"), and a Relaxation rate of not less than 10% as measured by the following method is used as the core film 2 of the adhesive sheet 3.

[Bending-stress relaxation rate measurement test]

(1) a core film is cut into a tape (width 20 mm, length 100 mm), the tape is rolled to form a loop with one surface thereof being inside, one end (10 mm) of the rolled tape is laid on top of the other and fixed with an adhesive tape to give a loop sample S; that is, one end and the other end of the tape are overlapped by 10 mm length to form a loop,
(2) as shown in Fig. 8, the loop sample S is put on a balance 41, and pressed with a flat plate surface 43A of the jig 42 such that the distance between the flat plate surface 43A and the balance 41 is 20 mm to deflect the loop sample S (symbol 45 in Fig. 8 is a pedestal), and
(3) from the start of pressing, the weight of the loop sample is measured at 5-second intervals by the balance, a ratio of the weight of the loop sample at 60 seconds from the start of pressing to the weight of the loop sample at 0 second therefrom is calculated based on the following calculation formula, and the obtained rate is taken as the relaxation rate.

$$\text{relaxation rate } (\%) = (1-(F_{60}-W)/(F_0-W)) \times 100$$

$F_0$: weight at 0 second from the start of pressing
$F_{60}$: weight at 60 seconds from the start of pressing
W: sample weight

Fig. 9 is a perspective view of the jig 42 in Fig. 8, wherein a leg 44 is formed on both ends of the flat plate 43 (50 mm X 100 mm flat plane size) in the longitudinal direction, and the height of leg 44 is set to the height of balance 41 + 20 mm (see Fig. 8). The material of the jig 42 is a metal such as aluminum and the like.

As is clear from the below-mentioned Examples, due to the presence of an adhesive sheet 3 comprising a core film 2 having a water vapor transmission rate of less than 7.5 g/100 sq. in 24 hr and a Relaxation rate of not less than 10%, and an adhesive layer formed on both surfaces of the core film, the sealing sheet simultaneously achieves a sufficiently high resistance to moisture permeation and superior level difference absorbability.

The core film 2 is generally a nonporous film. The "nonporous film" means a solid film excluding mesh cloth, woven fabric, non-woven fabric, mesh film (sheet), perforated film (sheet) and the like. The "nonporous film" means a solid film excluding mesh cloth, woven fabric, non-woven fabric, mesh film (sheet), perforated film (sheet) and the like. With mesh cloth, woven fabric, non-woven fabric, mesh film (sheet), and perforated film (sheet), a water vapor transmission rate of less than 7.5 g/100 sq. in·24 hr cannot be achieved or, even if a water vapor transmission rate of less than 7.5 g/100 sq. in·24 hr can be achieved, the thickness of the sealing sheet too high and the handling property thereof is markedly impaired. However, mesh cloth, woven fabric, non-woven fabric, mesh film (sheet), and perforated film

(sheet) may be laminated on a solid film as long as the water vapor transmission rate of the film after lamination (laminate film) is less than 7.5 g/100 sq. in·24 hr. A preferable form of the film is a "nonporous film". The "nonporous film" means a solid film excluding mesh cloth, woven fabric, non-woven fabric, mesh film (sheet), perforated film (sheet) and the like.

While the material of the core film 2 is not particularly limited, plastic such as polyester (e.g., poly(ethylene terephthalate) (PET) and the like); polyolefin (e.g., polyethylene, polypropylene, reactor TPO, ethylene-vinyl acetate copolymer and the like), polyvinyl chloride resin, polyamide, polystyrene and the like is preferable to achieve a film having a Relaxation rate of not less than 10%. Moreover, the core film 2 having a too high thickness has difficulty in achieving a Relaxation rate of not less than 10%. A sealing sheet composed of an adhesive sheet containing such film does not show superior level difference absorbability. Therefore, the thickness of the core film 2 is preferably comparatively small. Specifically, not more than 45 μm is preferable, and not more than 30 μm is more preferable. When the thickness of the core film 2 is too small, re-peeling workability of the sealing sheet tends to become low, adhesion tends to fail and the like. Therefore, the thickness of the core film 2 is preferably not less than 5 μm, and not less than 10 μm is more preferable.

In the present invention, the water vapor transmission rate of the core film 2 is preferably not more than 7.5 g/100 sq. in·24 hr, more preferably not more than 5.0 g/100 sq. in·24hr. While the lower limit is not particularly set, it is 0 g/100 sq. in·24 hrs.

In addition, the Relaxation rate of the core film 2 is preferably not less than 10%, more preferably not less than 20%. While the upper limit is not particularly set, it is generally not more than 100%. To achieve balance with other properties, it is preferably not more than 80%, more preferably not more than 60%, further preferably not more than 40%.

<Adhesive layer>

Aircraft members require high flame retardancy. While the use of the sealing sheet of the present invention is not particularly limited, since it is mainly intended for aircrafts, the adhesive layer 1 of the adhesive sheet is preferably a flame retardant-containing adhesive layer formed from an adhesive composition obtained by blending a pressure sensitive adhesive and a flame retardant.

While the pressure sensitive adhesive is not particularly limited, those capable of forming a pressure-sensitive adhesive layer superior in the elasticity, compressibility and adhesion are preferable. For example, acrylic, silicone or polyoxyalkylene adhesives can be mentioned. Among these, polyoxyalkylene adhesive is superior in the elasticity, compressibility and adhesion, and is preferable since an adhesive layer that improves detachability of the sealing sheet from the object to be sealed can be easily formed.

(Acrylic adhesive)

Specifically, as the acrylic adhesive, an acrylic adhesive containing, as a base polymer, an acrylic polymer with a monomer unit of alkyl(meth)acrylate as a main backbone is preferable (here, the "(meth)acrylate" means "acrylate and/or methacrylate").

The average carbon number of the alkyl group of the alkyl(meth)acrylate constituting the main backbone of the acrylic polymer is preferably about 1 to 18. Specific examples of such alkyl(meth)acrylate include methyl(meth)acrylate, ethyl(meth)acrylate, n-butyl(meth)acrylate, 2-ethylhexyl(meth)acrylate, isooctyi(meth)acrylate, isononyl (meth)acrylate, lauryl (meth)acrylate and the like. One or more kinds of these are used in combination. Among these, alkyl(meth)acrylate wherein the carbon number of the alkyl group is 1 to 12 is preferable.

One or more kinds of various monomers may be introduced into an acrylic polymer by copolymerization to improve adhesiveness to a sealed object and heat resistance of the pressure-sensitive adhesive sheet containing a non-halogenated flame retardant. Specific examples of such copolymerizable monomer include monomers containing a hydroxyl group such as 2-hydroxyethyl (meth)acrylate, 2-hydroxypropyl (meth)acrylate, 4-hydroxybutyl (meth)acrylate, 6-hydroxyhexyl (meth)acrylate, 8-hydroxyoctyl (meth)acrylate, 10-hydroxydecyl (meth)acrylate, 12-hydroxylauryl (meth)acrylate, (4-hydroxymethylcyclohexyl)methyl (meth)acrylate and the like; monomers containing a carboxyl group such as (meth)acrylic acid, carboxyethyl(meth)acrylate, carboxypentyl(meth)acrylate, itaconic acid, maleic acid, fumaric acid, crotonic acid and the like; monomers containing an acid anhydride group such as maleic anhydride, itaconic anhydride and the like; caprolactone adduct of acrylic acid; monomers containing a sulfo group such as styrenesulfonic acid, allylsulfonic acid, 2-(meth)acrylamide-2-methylpropanesulfonic acid, (meth)acrylamidepropanesulfonic acid, sulfopropyl (meth)acrylate, (meth)acryloyloxynaphthalenesulfonic acid and the like; monomers containing a phosphate group such as 2-(phosphonooxy)ethyl acrylate etc., and the like. In addition, nitrogen containing vinyl monomers can be mentioned, for example, maleimide, N-cyclohexylmaleimide, N-phenylmaleimide; N-acryloylmorpholine; (N-substitution)amide monomers such as (meth)acrylamide, N,N-dimethyl(meth)acrylamide, N,N-diethyl(meth)acrylamide, N-hexyl(meth)acrylamide, N-methyl(meth)acrylamide, N-butyl(meth)acrylamide, N-butyl(meth)acrylamide, N-methylol(meth)acrylamide, N-methylolpropane(meth)acrylamide and the like; alkylaminoalkyl (meth)acrylate monomers such

as aminoethyl (meth)acrylate, aminopropyl (meth)acrylate, N,N-dimethylaminoethyl (meth)acrylate, t-butylaminoethyl (meth)acrylate, 3-(3-pyridinyl)propyl(meth)acrylate and the like; alkoxyalkyl (meth)acrylate monomers such as methoxyethyl (meth)acrylate, ethoxyethyl (meth)acrylate and the like; succinimide monomers such as N-(meth)acryloyloxymethylenesuccinimide, N-(meth)acryloyl-6-oxyhexamethylenesuccinimide, N-(meth)acryloyl-8-oxyoctamethylenesuccinimide, N-acryloylmorpholine etc., and the like can be mentioned.

Furthermore, vinyl monomers such as vinyl acetate, vinyl propionate, N-vinylpyrrolidone, methylvinylpyrrolidone, vinylpyridine, vinylpiperidone, vinylpyrimidine, vinylpiperazine, vinylpyrazine, vinylpyrrole, vinylimidazole, vinyloxazole, vinylmorpholine, N-vinylcarboxylic acid amides, styrene, $\alpha$-methylstyrene, N-vinylcaprolactam and the like; cyanoacrylate monomers such as acrylonitrile, methacrylonitrile and the like; epoxy group-containing acrylic monomers such as glycidyl (meth)acrylate and the like; glycol acrylate monomers such as polyethylene glycol (meth)acrylate, polypropylene glycol (meth)acrylate, methoxyethyleneglycol (meth)acrylate, methoxypolypropyleneglycol (meth)acrylate and the like; acrylate monomers such as tetrahydrofurfuryl (meth)acrylate, fluorine-containing (meth)acrylate, silicone (meth)acrylate, 2-methoxyethylacrylate etc., and the like can also be mentioned.

Among these, when an isocyanate based crosslinking agent is used as a crosslinking agent, a hydroxyl group-containing monomer is preferable since the reactivity with the isocyanate group is good. Carboxyl group-containing monomers such as (meth)acrylic acid and the like are preferable and acrylic acid is particularly preferable in view of the adhesiveness of the pressure-sensitive adhesive sheet to a sealed object, adhesion durability, weatherability and the like.

The weight ratio of the copolymerizable monomer in the acrylic polymer is preferably about 0.1 - 10 wt%.

While the average molecular weight of the acrylic polymer is not particularly limited, the weight average molecular weight is generally about 300,000 to 2,500,000.

Acrylic polymers are produced by various known methods and, for example, radical polymerization methods such as bulk polymerization method, solution polymerization method, suspension polymerization method and the like can be appropriately employed. As a radical polymerization initiator, various known azo based initiators and peroxide based initiators can be used. The reaction temperature is generally about 50 to 80°C, and the reaction time is 1 to 8 hr.

The acrylic adhesive can contain a crosslinking agent in addition to a base polymer, and the crosslinking agent can improve adhesion to a sealed object and durability, and can provide reliability at a high temperature and maintain the form of the adhesive itself. As the crosslinking agent, a known crosslinking agent such as isocyanate based crosslinking agents, epoxy based crosslinking agents, peroxide based crosslinking agents, metal chelate based crosslinking agents, oxazoline based crosslinking agents and the like can be appropriately used. One or more kinds of these crosslinking agents can be used in combination. The amount of the crosslinking agent to be used is not more than 10 parts by weight, preferably 0.01 - 5 parts by weight, more preferably 0.02 - 3 parts by weight, relative to 100 parts by weight of the acrylic polymer. A ratio of the crosslinking agent exceeding 10 parts by weight is not preferable, since crosslinking may proceed too much to decrease adhesiveness.

(Silicone adhesive)

The silicone adhesive is not particularly limited, and peroxide crosslinked silicone adhesives (peroxide curable silicone adhesive) and addition reaction silicone adhesives, which are generally used, can be preferably used. These peroxide crosslinked silicone adhesives and addition reaction silicone adhesives may be commercially available products. Specific examples of the peroxide crosslinked silicone adhesive include KR-3006A/BT manufactured by Shin-Etsu Chemical Co., Ltd., SH 4280 PSA manufactured by Toray Dow Corning Corporation Silicone and the like. Specific examples of the addition reaction silicone adhesive include X-40-3501 manufactured by Shin-Etsu Chemical Co., Ltd., BY 24-712 manufactured by Toray Dow Corning Corporation Silicone, TSE32X manufactured by Momentive Performance Materials Inc and the like.

(Polyoxyalkylene adhesive)

As the polyoxyalkylene adhesive, a cured product of a composition containing the following components A - C is preferable:

A: a polyoxyalkylene polymer having at least one alkenyl group in each molecule
B: a compound containing two or more hydrosilyl groups on average in each molecule
C: a hydrosilylation catalyst.

The above-mentioned "polyoxyalkylene polymer having at least one alkenyl group in each molecule" for component A is not particularly limited, and various polymers can be used. However, one wherein the main chain of the polymer has a repeat unit represented by the formula (1) shown below is preferable:

formula (1) : $-R^1-O-$

wherein $R^1$ is an alkylene group.

$R^1$ is preferably a linear or branched alkylene group having 1 to 14, more preferably 2 to 4, carbon atoms.

As specific examples of the repeat unit represented by the general formula (1), $-CH_2O-$, $-CH_2CH_2O-$, $-CH_2CH(CH_3)O-$,$-CH_2CH(C_2H_5)O-$, $-CH_2C(CH_3)_2O-$, $-CH_2CH_2CH_2CH_2O-$ and the like can be included. The main chain skeleton of the polyoxyalkylene polymer may consist of only one kind of repeat unit, and may consist of two kinds or more of repeat units. Particularly, from the aspects of availability and workability, a polymer having - $CH_2CH(CH_3)O-$ as a main repeat unit is preferable. In the main chain of the polymer, a repeat unit other than the oxyalkylene group may be contained. In this case, the total sum of oxyalkylene units in the polymer is preferably not less than 80% by weight, particularly preferably not less than 90% by weight.

Although the polymer of component A may be a linear polymer or a branched polymer, or a mixture thereof, it preferably contains a linear polymer in a proportion of not less than 50% by weight, so that the adhesive layer will show good adhesiveness to the surface of various materials.

The molecular weight of the polymer of component A is preferably 500 to 50,000, more preferably 5,000 to 30,000, in terms of number-average molecular weight. When the number average molecular weight is less than 500, the obtained cured product tends to be too brittle, and when the number average molecular weight exceeds 50,000, the viscosity becomes unfavorably too high to markedly decrease workability. The number average molecular weight here means the value obtained by Gel Permeation Chromatography (GPC) method.

The polymer of component A preferably has a narrow molecular weight distribution wherein the ratio of weight-average molecular weight and number-average molecular weight (Mw/Mn) is not more than 1.6; a polymer having an Mw/Mn of not more than 1.6 produces a decreased viscosity of the composition and offers improved workability. Hence, the Mw/Mn is more preferably not more than 1.5, still more preferably not more than 1.4. As mentioned herein, Mw/Mn refers to a value obtained by the gel permeation chromatography (GPC) method.

Here, the molecular weight (based on polystyrene) is measured by the GPC method using GPC apparatus (HLC-8120GPC) manufactured by Tosoh Corporation, where the measurement conditions are as follows.

sample concentration: 0.2 wt% (THF solution)
sample injection volume: 10 μl
eluent: THF
flow rate: 0.6 ml/min
measurement temperature: 40°C
column: sample column TSKgel GMH-H(S)
detector: differential refractometer

With regard to the polymer of component A (polyoxyalkylene polymer having at least one alkenyl group in each molecule), the alkenyl group is not subject to limitation, but an alkenyl group represented by the formula (2) shown below is suitable:

formula (2) : $H_2C=C(R^2)-$

wherein $R^2$ is hydrogen or a methyl group.

The mode of binding of the alkenyl group to the polyoxyalkylene polymer is not subject to limitation; for example, alkenyl group direct bond, ether bond, ester bond, carbonate bond, urethane bond, urea bond and the like can be included.

As specific examples of the polymer of component A, a polymer represented by the general formula (3) : $\{H_2C=C(R^{3a})-R^{4a}-O\}a_1R^{5a}$
wherein $R^{3a}$ is hydrogen or a methyl group; $R^{4a}$ is a divalent hydrocarbon group having 1 to 20 carbon atoms, optionally having one or more ether groups, $R^{5a}$ is a polyoxyalkylene polymer residue; $a_1$ is a positive integer,
can be included. As $R^{4a}$ in the formula, specifically, $-CH_2-$,$-CH_2CH_2-$, $-CH_2CH_2CH_2-$, $-CH_2CH(CH_3)CH_2-$, $-CH_2CH_2CH_2CH_2-$, $-CH_2CH_2OCH_2CH_2-$, or $-CH_2CH_2OCH_2CH_2CH_2-$ and the like can be included; for the ease of synthesis, $-CH_2-$ is preferable.

A polymer having an ester bond, represented by the formula (4) : $\{H_2C=C(R^{3b})-R^{4b}-OCO\}a_2R^{5b}$
wherein $R^{3b}$, $R^{4b}$, $R^{5b}$ and $a_2$ have the same definitions as those of $R^{3a}$, $R^{4a}$, $R^{5a}$, and $a_1$, respectively,
can also be included.

A polymer represented by the formula (5) : $\{H_2C=C(R^{3c})\}a_3R^{5c}$
wherein $R^{3c}$, $R^{5c}$ and $a_3$ have the same definitions as those of $R^{3a}$, $R^{5a}$, and $a_1$, respectively,
can also be included.

Furthermore, a polymer having a carbonate bond, represented by the formula (6): $\{H_2C=C(R^{3d})-R^{4d}-O(CO)O\}$

$a_4R^{5d}$

wherein $R^{3d}$, $R^{4d}$, $R^{5d}$ and $a_4$ have the same definitions as those of $R^{3a}$, $R^{4a}$, $R^{5a}$ and $a_1$, respectively, can also be included.

It is preferable that at least 1, preferably 1 to 5, more preferably 1.5 to 3, alkenyl groups be present in each molecule of the polymer of component A. If the number of alkenyl groups contained in each molecule of the polymer of component A is less than 1, the curing is insufficient; if the number exceeds 5, the mesh structure becomes so dense that the polymer sometimes fails to exhibit a good adherence. The polymer of component A can be synthesized according to the method described in JP-A-2003-292926, and any commercially available product can be used.

Particularly preferable embodiment of the polymer of component A includes terminus-allylated polyoxypropylene wherein an allyl group is bonded to both terminals of polypropylene glycol.

Any component B compound containing two or more hydrosilyl groups on average in each molecule can be used without limitation, as long as it has a hydrosilyl group (a group having an Si-H bond), but from the viewpoint of the ease of obtainment of raw materials and compatibility with the component A, an organohydrogen polysiloxane modified with an organic constituent is particularly preferable. The aforementioned polyorganohydrogen siloxane modified with an organic constituent more preferably has an average of 2 to 8 hydrosilyl groups in each molecule. Specific examples of the structure of the polyorganohydrogen siloxane include linear or cyclic ones represented by, for example,

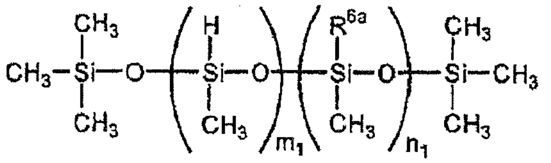

wherein $2 \leq m_1+n_1 \leq 50$, $2 \leq m_1$, and $0 \leq n_1$, $R^{6a}$ is a hydrocarbon group having 2 to 20 carbon atoms in the main chain thereof, optionally comprising one or more phenyl groups,

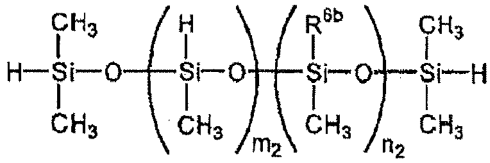

wherein $0 \leq m_2+n_2 \leq 50$, $0 \leq m_2$, and $0 \leq n_2$, $R^{6b}$ is a hydrocarbon group having 2 to 20 carbon atoms in the main chain thereof, optionally comprising one or more phenyl groups, or

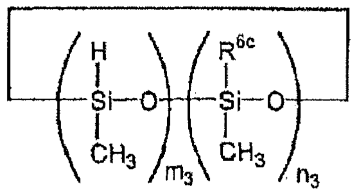

wherein $3 \leq m_3+n_3 \leq 20$, $2 \leq m_3 \leq 19$, and $0 \leq n_3 < 18$, $R^{6c}$ is a hydrocarbon group having 2 to 20 carbon atoms in the main chain thereof, optionally having one or more phenyl groups, and the like, and ones having two or more of these units, represented by the following:

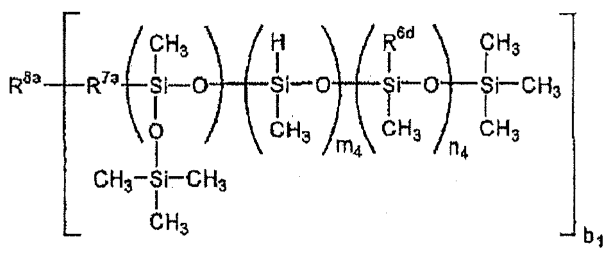

wherein $1 \leq m_4+n_4 \leq 50$, $1 \leq m_4$, and $0 \leq n_4$, $R^{6d}$ is a hydrocarbon group having 2 to 20 carbon atoms in the main chain thereof, optionally having one or more phenyl groups, $2 \leq b_1$, $R^{8a}$ is a divalent to tetravalent organic group, and $R^{7a}$ is a divalent organic group, but $R^{7a}$ may be absent depending on the structure of $R^{8a}$,

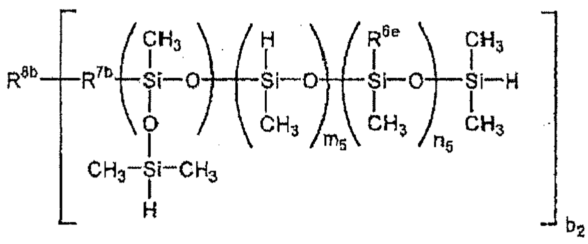

wherein $0 \leq m_5+n_5 \leq 50$, $0 \leq m_5$, and $0 \leq n_5$, $R_{6e}$ is a hydrocarbon group having 2 to 20 carbon atoms in the main chain thereof, optionally having one or more phenyl groups, $2 \leq b_2$, $R^{8b}$ is a divalent to tetravalent organic group, and $R^{7b}$ is a divalent organic group, however, $R^{7b}$ may be absent depending on the structure of $R^{8b}$, or

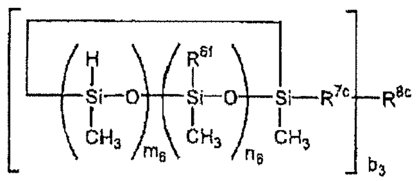

wherein $3 \leq m_6+n_6 \leq 50$, $1 \leq m_6$, and $0 \leq n_6$, $R^{6f}$ is a hydrocarbon group having 2 to 20 carbon atoms in the main chain thereof, optionally comprising one or more phenyl groups, $2 \leq b_3$, $R^{8c}$ is a divalent to tetravalent organic group, and $R^{7c}$ is a divalent organic group, however, $R^{7c}$ may be absent depending on the structure of $R^{8c}$, and the like.

The "compound containing two or more hydrosilyl groups on average in each molecule" for component B preferably has good compatibility with the component A and the component C, or good dispersion stability in the system. Particularly, if the viscosity of the entire system is low, use of an ingredient whose compatibility with any of the above-described ingredients is low as the component B sometimes causes phase separation and a curing failure.

As a specific example of the component B having relatively good compatibility with the component A and the component C, or relatively good dispersion stability, the following can be included.

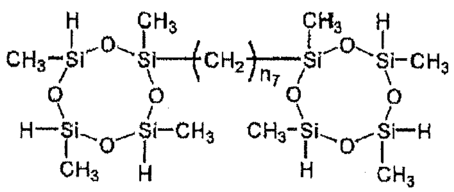

wherein $n_7$ is an integer of not less than 4 and not more than 10,

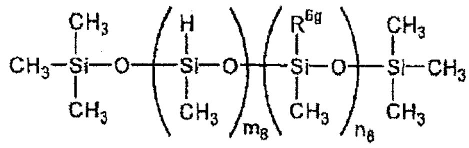

wherein $2 \leq m_8 \leq 10$ and $0 \leq n_8 \leq 5$, $R^{6g}$ is a hydrocarbon group having eight or more carbon atoms.

As specific preferable examples of the component B, polymethylhydrogen siloxane can be included; for assuring compatibility with the component A and adjusting the SiH content, a compound modified with α-olefin, styrene, α-methylstyrene, allylalkyl ether, allylalkyl ester, allylphenyl ether, allylphenyl ester or the like can be included; as an example, the following structure can be included.

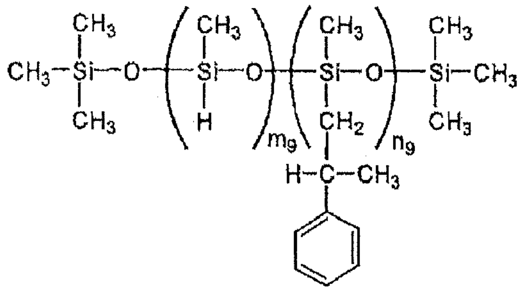

wherein $2 \leq m_9 \leq 20$ and $1 \leq n_9 \leq 20$.

The component B can be synthesized by a commonly known method, and any commercially available product can be used.

In the present invention, the component C "hydrosilylation catalyst" is not subject to limitation; an optionally chosen one can be used. As specific examples, chloroplatinic acid; platinum; solid platinum carried by a carrier such as alumina, silica, or carbon black; a platinum-vinylsiloxane complex {for example, $Pt_n(ViMe_2SiOSiMe_2Vi)_m$, $Pt[(MeViSiO)_4]_m$ and the like}; a platinum-phosphine complex {for example, $Pt(PPh_3)_4$, $Pt(PBu_3)_4$ and the like}; a platinum-phosphite complex {for example, $Pt[P(OPh)_3]_4$, $Pt[P(OBu)_3]_4$ and the like}; $Pt(acac)_2$; the platinum-hydrocarbon conjugates described in US Patent 3159601 and 3159662 of Ashby et al.; the platinum alcoholate catalyst described in US Patent 3220972 of Lamoreaux et al. and the like can be included. (In these formulas, Me represents a methyl group, Bu represents a butyl group, Vi represents a vinyl group, Ph represents a phenyl group, acac represents an acetylacetonate, and each of n and m represents an integer.)

As examples of catalysts other than platinum compounds, $RhCl(PPh_3)_3$, $RhCl_3$, $Rh/Al_2O_3$, $RuCl_3$, $IrCl_3$, $FeCl_3$, $AlCl_3$, $PdCl_2$. $2H_2O$, $NiCl_2$, $TiCl_4$ and the like can be included.

These catalysts may be used alone, and may be used in combination of 2 kinds or more. With regard to catalyst activity, chloroplatinic acid, a platinum-phosphine complex, a platinum-vinylsiloxane complex, $Pt(acac)_2$ and the like are preferable.

Although the amount of the component C formulated is not subject to limitation, from the viewpoint of assurance of composition potlife and transparency of the cured product (adhesive layer), the amount is generally not more than $1x10^{-1}$ mol, preferably not more than $5.3x10^{-2}$ mol, relative to 1 mol of alkenyl groups in the component A; particularly, from the viewpoint of transparency of the cured product (adhesive layer), the amount is more preferably not more than $3.5x10^{-2}$ mol, particularly preferably not more than $1.4x10^{-3}$ mol. When the amount exceeds $1x10^{-1}$ mol relative to 1 mol of alkenyl groups in the component A, the finally obtained cured product (adhesive layer) is likely to undergo yellowing and the transparency of the cured product (adhesive layer) tends to be damaged. When the amount of the component C formulated is too low, the composition curing speed is slow, and the curing quality tends to be unstable; therefore, the amount is preferably not less than $8.9x10^{-5}$ mol, more preferably not less than $1.8x10^{-4}$ mol.

The composition comprising the above-described components A to C is cured by heating. That is, the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby curing is completed. The cured product has low activity, and does not react upon contact with various substances such as water, metal, plastic material and the like.

In a composition comprising components A to C, it is preferable that the hydrosilyl groups of the component B (compound B) be contained (formulated) so that the functional group ratio to the alkenyl groups of the component A (compound A) will be not less than 0.3 and less than 2, more preferably not less than 0.4 and less than 1.8, and still more preferably not less than 0.5 and less than 1.5. When the hydrosilyl groups are contained so that the foregoing functional group ratio will exceed 2, the crosslinking density increases, and it is sometimes impossible to obtain adhesiveness. When the functional group ratio is less than 0.3, crosslinking in the cured product becomes too weak, and retention of characteristics at high temperatures may become difficult.

(Flame retardant)

When the adhesive layer is a flame retardant-containing adhesive layer, the flame retardant is not particularly limited but a halogen-free flame retardant which does not produce a toxic halogen gas, is preferable and, for example, known flame retardants free of halogen atom such as hydrated metal compound based flame retardants, inorganic compound based flame retardants, phosphorus flame retardant, silicone flame retardant, nitrogen compound based flame retardants, organic metal compound based flame retardants and the like can be used. Of these, phosphorus flame

retardants are preferable since they can impart flame retardancy and are superior in the suppression of drip during combustion, compatibility to environmental regulation and the like.

Examples of the hydrated metal compound based flame retardant include aluminum hydroxide, magnesium hydroxide, calcium hydroxide and the like. Examples of the inorganic compound based flame retardant include antimony compound, zinc borate, zinc stannate, molybdenum compound, zinc oxide, zinc sulfide, zeolite, titanium oxide, nano filler (montmorillonite (MMT), nano hydrated metal compound, silica), carbon nanotube, calcium carbonate and the like.

Examples of the phosphorus flame retardant include phosphates, aromatic condensed phosphates, ammonium polyphosphates and the like. Specific examples of the phosphate include triphenyl phosphate, tricresyl phosphate (TCP), cresyl diphenyl phosphate (CDP), 2-ethylhexyldiphenyl phosphate, triethyl phosphate (TEP), tri-n-butyl phosphate, trixylenyl phosphate, xylenyl diphenyl phosphate (XDP) and the like. Specific examples of the aromatic condensed phosphate include resorcinol bisdiphenyl phosphate, bisphenol A bis(diphenyl phosphate), resorcinol bisdixylenyl phosphate and the like. Specific examples of the ammonium polyphosphate include ammonium polyphosphate (APP), melamine-modified ammonium polyphosphate and coated ammonium polyphosphate. Here, the coated ammonium polyphosphate is obtained by coating or microcapsulating ammonium polyphosphate with a resin to enhance water resistance. The phosphate, aromatic condensed phosphate and ammonium polyphosphate can be used concurrently. A combined use of phosphate and ammonium polyphosphate is preferable since flame retardancy in both the solid phase and gaseous phase can be achieved by a combination of a flame retardancy effect of a char layer formed by phosphate and a flame retardancy effect of noncombustible gas production by ammonium polyphosphate.

Examples of the silicone flame retardant include dimethylsilicone, amino-modified silicone, epoxy-modified silicone and the like.

Examples of the nitrogen compound based flame retardant include hindered amine compounds, melamine cyanurate, triazine compounds, guanidine compounds and the like.

Examples of the organic metal compound based flame retardant include copper ethylenediaminetetraacetate, calcium perfluorobutanesulfonate and the like.

One or more kinds of the flame retardants can be used in a mixture. While the amount thereof to be used varies depending on the kind of the flame retardant, it is generally preferably not less than 10 parts by weight, more preferably not less than 20 parts by weight, particularly preferably not less than 30 parts by weight, relative to 100 parts by weight of the adhesive, since the effects of flame retardancy, drip suppression by char layer formation and the like can be efficiently achieved. It is preferably not more than 350 parts by weight, more preferably not more than 250 parts by weight, particularly preferably not more than 150 parts by weight, since more superior adhesive property, preservability and the like can be obtained.

(Tackifier resin)

The pressure-sensitive adhesive layer 1 can contain a tackifier resin to improve seal performance (adhesiveness to the object to be sealed) of the sealing sheet or to improve seal performance (adhesiveness to the object to be sealed) and flame retardancy. Examples of the tackifier resin include terpene tackifier resin, phenol tackifier resin, rosin based tackifier resin, petroleum tackifier resin and the like. One or more kinds of tackifier resin can be used.

Examples of the terpene tackifier resin include terpene resins such as $\alpha$-pinene polymer, $\beta$-pinene polymer, dipentene polymer and the like, modified terpene resins (e.g., terpenephenol resin, styrene-modified terpene resin, aromatic-modified terpene resin, hydrogenated terpene resin etc.) obtained by modifying (phenol-modification, aromatic-modification, hydrogenated-modification, hydrocarbon-modification etc.) these terpene resins, and the like.

Examples of the phenol tackifier resin include condensates (e.g., alkylphenol resin, xyleneformaldehyde resin and the like) of various phenols (e.g., phenol, m-cresol, 3,5-xylenol, p-alkylphenol, resorcin etc.) and formaldehyde, resol obtained by addition reaction of the aforementioned phenol with formaldehyde using an alkali catalyst, novolac obtained by condensation reaction of the aforementioned phenol with formaldehyde using an acid catalyst and the like.

Examples of the rosin based tackifier resin include unmodified rosin (natural rosin) such as gum rosin, wood rosin, tall oil rosin and the like, modified rosin (hydrogenated rosin, disproportionated rosin and polymerized rosin, and other chemically-modified rosin etc.) obtained by modifying the above unmodified rosins by hydrogenation, disproportionation, polymerization and the like, various rosin derivatives and the like. Examples of the aforementioned rosin derivative include rosin esters such as modified rosin ester compound obtained by esterifying modified rosin (rosin ester compound obtained by esterifying unmodified rosin with an alcohol, hydrogenated rosin, disproportionated rosin, polymerized rosin and the like) with an alcohol and the like; unsaturated fatty acid-modified rosins obtained by modifying unmodified rosin or modified rosin (hydrogenated rosin, disproportionated rosin, polymerized rosin etc.) with unsaturated fatty acid; unsaturated fatty acid modified rosin ester obtained by modifying rosin ester with an unsaturated fatty acid; rosin alcohols obtained by reduction-treating a carboxyl group in unmodified rosin, modified rosin (hydrogenated rosin, disproportionated rosin, polymerized rosin etc.), unsaturated fatty acid-modified rosins or unsaturated fatty acid-modified rosin esters; metal salts of rosins (particularly, rosin esters) such as unmodified rosin, modified rosin, various rosin

derivatives and the like; and the like. In addition, as the rosin derivative, a rosin phenol resin obtained by adding phenol to rosins (unmodified rosin, modified rosin, various rosin derivatives etc.) with an acid catalyst and subjecting same to thermal polymerization and the like can also be used.

Examples of the alcohol to be used for obtaining the above-mentioned rosin esters include divalent alcohols such as ethylene glycol, diethylene glycol, propylene glycol, neopentyl glycol and the like, trivalent alcohols such as glycerol, trimethylolethane, trimethylolpropane and the like, tetravalent alcohols such as pentaerythritol, diglycerol and the like, hexahydric alcohols such as dipentaerythritol etc. and the like. These are used alone or in a combination of two or more kinds thereof.

Examples of the petroleum tackifier resin include known petroleum resins such as aromatic petroleum resin, aliphatic petroleum resin, alicyclic petroleum resin (aliphatic cyclic petroleum resin), aliphatic aromatic petroleum resin, aliphatic alicyclic petroleum resin, hydrogenated petroleum resin, coumarone resin, coumarone indene resin and the like. Specific examples of the aromatic petroleum resin include polymers using one or more kinds of vinyl group-containing aromatic hydrocarbon having 8 to 10 carbon atoms (styrene, o-vinyltoluene, m-vinyltoluene, p-vinyltoluene, $\alpha$-methylstyrene, $\beta$-methylstyrene, indene, methylindene etc.) and the like. As the aromatic petroleum resin, an aromatic petroleum resin obtained from a fraction such as vinyltoluene, indene and the like (i.e., "C9 petroleum fraction") (namely, "C9 based petroleum resin") can be used preferably. Examples of the aliphatic petroleum resin include polymers obtained by using one or more kinds selected from dienes such as olefin having 4 or 5 carbon atoms (e.g., butene-1, isobutylene, pentene-1 etc.), butadiene, piperylene, 1,3-pentadiene, isoprene etc., and the like. Furthermore, as the aliphatic petroleum resin, an aliphatic petroleum resin obtained from a fraction such as butadiene, piperylene, isoprene and the like (i.e., "C4 petroleum fraction", "C5 petroleum fraction" etc.) (namely, "C4 based petroleum resin", "C5 based petroleum resin" etc.) can be used preferably. Examples of the alicyclic petroleum resin include an alicyclic hydrocarbon resin obtained by cyclization and dimerization of an aliphatic petroleum resin (i.e., "C4 based petroleum resin", "C5 based petroleum resin" etc.), followed by polymerization, a polymer of a cyclic diene compound (cyclopentadiene, dicyclopentadiene, ethylidenenorbornane, dipentene, ethylidenebicycloheptene, vinylcycloheptene, tetrahydroindene, vinylcyclohexene, limonene etc.) or a hydrogenated resin thereof, an alicyclic hydrocarbon resin obtained by hydrogenating the aromatic ring of the aforementioned aromatic hydrocarbon resin, the following aliphatic aromatic petroleum resin and the like. Examples of the aliphatic aromatic petroleum resin include a styrene-olefin copolymer and the like. In addition, as the aliphatic aromatic petroleum resin, a so-called "C5/C9 copolymerization petroleum resin" and the like can be used.

The tackifier resin is preferably terpene tackifier resin and/or rosin based tackifier resin, particularly preferably rosin based tackifier resin, from the aspect of flame retardancy of sealing sheet. The terpene tackifier resin and rosin based tackifier resin easily provide effect as flame retardant auxiliary agents. Using these, adhesion of a sealing sheet to a sealed object and flame retardancy of a sealing sheet can be improved more remarkably. The terpene tackifier resin is particularly preferably a terpenephenol resin, the rosin based tackifier resin is particularly preferably rosin ester (i.e., esterified compound of unmodified rosin, hydrogenated rosin, disproportionated rosin or polymerized rosin), and the rosin ester is preferably trivalent or higher polyhydric alcohol ester, particularly preferably tetra to hexahydric polyhydric alcohol ester.

One or more kinds of the tackifier resins can be used in combination, and the amount thereof to be used is not particularly limited. However, it is preferably not less than 5 parts by weight, more preferably not less than 10 parts by weight, particularly preferably not less than 15 parts by weight, relative to 100 parts by weight of the adhesive, since it becomes a carbon source and sufficiently exhibits the effect of a phosphorus flame retardant as an auxiliary agent. From the aspects of maintenance of adhesive property, preservability, handling property, dispersibility and the like, it is preferably not more than 100 parts by weight, more preferably not more than 60 parts by weight, particularly preferably not more than 40 parts by weight.

The pressure-sensitive adhesive layer 1 can contain, where necessary, various additives such as plasticizer, filler made of glass fiber, glass bead, metal powder or other inorganic powder etc., pigment, colorant, antioxidant, UV absorber and the like.

(Primer layer)

A primer layer can be formed on a surface (at least one surface) of the core film 2 of the adhesive sheet 3. When the primer layer is formed, the binding force between the core film 2 and the flame retardant-containing adhesive layer 1 increases, and therefore, the resistance to moisture permeation of the sealing sheet can be further improved. In addition, formation of a gap between the core film 2 and the flame retardant-containing adhesive layer 1 can be prevented at a higher level when winding the sealing sheet after production in a roll shape (to produce a roll-shaped sealing sheet), and when drawing out the sealing sheet (unwinding) from a roll-shaped sealing sheet and mounting same on a sealed object. Such primer layer can be formed not only on one surface of the core film 2 but also on both surfaces of the core film 2. When the sealing sheet has a substrate sheet 4, the primer layer 6 is preferably formed on one surface of the core film 2, which is on the opposite side from the substrate sheet 4 side. When the primer layer is formed on one surface

opposite from the substrate sheet 4 side, the core film 2 is not separated from the adhesive layer 1 adhered to the object to be sealed during detachment of the sealing sheet from the object to be sealed, but the adhesive layer 1 on the substrate sheet 4 side is detached from the core film 2. As a result, the adhesive layer 1 is not left on the object to be sealed, but the adhesive layer 1 and the core film 2 are left in integration. Consequently, the adhesive layer 1 remaining in the object to be sealed can be easily removed by detaching therefrom.

While such primer layer is not particularly limited as long as it can enhance the binding force between the core film 2 and the adhesive layer 1, it is, for example, polyester polyurethane; chlorinated hydrocarbon resin such as chlorinated polypropylene and the like; acrylic polymer or the like, with preference given to polyester polyurethane. While the polyester polyurethane is not particularly limited, it is, for example, the obtained by urethane modification of polyester having two or more hydroxy groups with a polyisocyanate compound (bifunctional or more isocyanate compound).

The urethane modification include, for example, dissolving a polyester having two or more hydroxy groups in an organic solvent unreactive with polyisocyanate compounds, adding a polyisocyanate compound, adding, as necessary, a reaction catalyst such as an amine compound, an organic metal compound and the like, and heating the mixture.

Examples of the polyester having two or more hydroxy groups used for producing polyester polyurethane include polyester obtained by reacting dibasic acids such as terephthalic acid, isophthalic acid, adipic acid, azelaic acid, sebacic acid and the like or a dialkylester thereof or a mixture thereof with glycol such as ethylene glycol, propylene glycol, diethylene glycol, butylene glycol, neopentyl glycol, 1,6-hexanediol, 3-methyl-1,5-pentanediol, 3,3'-dimethylolheptane, polyoxyethylene glycol, polyoxypropylene glycol, polytetramethylene ether glycol and the like or a mixture thereof; and polyester obtained by ring opening polymerization of lactone such as polycaprolactone, polyvalerolactone, poly(β-methyl-γ-valerolactone) and the like. One or more kinds of these can be used.

Examples of the polyisocyanate compound used for the production of polyester polyurethane include alicyclic, aromatic and aliphatic diisocyanate compounds. For example, as the alicyclic diisocyanate, cyclohexane-1,4-diisocyanate, isophorone diisocyanate, norbornanediisocyanate, dicyclohexylmethane-4,4'-diisocyanate, 1,3-bis(isocyanatemethyl)cyclohexane, methylcyclohexanediisocyanate and the like can be mentioned.

As the aromatic diisocyanate, 1,5-naphthylenediisocyanate, 4,4'-diphenylmethanediisocyanate, 4,4'-diphenyldimethylmethanediisocyanate, 4,4'-dibenzylisocyanate, dialkyldiphenylmethanediisocyanate, tetraalkyldiphenylmethanediisocyanate, 1,3-phenylenediisocyanate, 1,4-phenylenediisocyanate, tolylene diisocyanate, xylylene diisocyanate, m-tetramethylxylylene diisocyanate and the like can be mentioned.

As the aliphatic diisocyanate, butane-1,4-diisocyanate, hexamethylene diisocyanate, isopropylene diisocyanate, methylene diisocyanate, 2,2,4-trimethylhexamethylene diisocyanate, lysine diisocyanate, dimer diisocianate wherein carboxyl group of dimer acid is converted to isocyanate group and the like can be mentioned.

As the polyisocyanate compound, a trifunctional or more polyisocyanate compound such as an adduct, isocyanurate, burette and the like can also be used. Diisocyanate compound is one of the preferable embodiments of the polyisocyanate compound since it is not gelled easily.

One or more kinds of polyester polyurethane can be used in combination.

The thickness of the primer layer is preferably 0.1 - 10 μm, more preferably 0.5 - 5 μm. Such thickness can sufficiently enhance the binding force between the core film 2 and the flame-retardant-containing adhesive layer 1.

When the sealing sheet of the present invention has a substrate sheet 4, an adhesion-imparting agent can be added to the adhesive layer 1 to increase the adhesiveness to the substrate sheet 4. Examples of the adhesion promoter include various silane coupling agents, epoxy resin and the like. Of these, silane coupling agents having a functional group such as an epoxy group, a methacryloyl group, a vinyl group and the like are preferable since they are effective for expression of adhesiveness. In addition, a catalyst for reacting a silyl group and an epoxy group can be added concurrently with a silane coupling agent and an epoxy resin. When a polyoxyalkylene adhesive (adhesive consisting of a cured product of a composition containing the above-mentioned components A - C) is used, such catalyst should be selected in consideration of the influence on the curing reaction (hydrosilylation reaction) to produce the adhesive.

When a polyoxyalkylenean adhesive (adhesive composed of a cured product of a composition containing the above-mentioned components A - C) is used as an adhesive, it may contain a storage stability improving agent to improve the storage stability. As the storage stability improving agent, a compound commonly known as a storage stabilizer for the component B of the present invention can be used without limitation. For example, a compound comprising an aliphatic unsaturated bond, an organic phosphorus compound, an organic sulfur compound, a nitrogen-containing compound, a tin compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-buten-3-ol, 2-methyl-3-buten-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be included, but these are not to be construed as limitative.

While the thickness of the adhesive layer 1 of the adhesive sheet 3 is not particularly limited, the total thickness of the two adhesive layers sandwiching the core film 2 is preferably not less than 200 μm, more preferably not less than

300 μm, from the aspects of level difference absorbability, seal performance and the like of the sealing sheet. In addition, the total thickness of the two adhesive layers sandwiching the core film 2 is preferably not more than 1200 μm, more preferably not more than 1000 μm, from the aspects of the resistance to moisture permeation, cutting suitability and the of the sealing sheet. The layer thickness of the two adhesive layers sandwiching the core film 2 may be the same or different, but preferably the same to reduce the cost by simplifying the production level difference.

[Substrate sheet]

When the sealing sheet of the present invention encompasses an embodiment having a substrate sheet 4, the substrate sheet 4 imparts a sealing sheet with self-supporting property, improves the installing workability of the sealing sheet, as well as improves the resistance to moisture permeation of the sealing sheet.

As substrate sheet 4, a film having not only heat resistance required of a sealing sheet but also superior water-repellency, and/or comprising a material having high resistance to moisture permeation is preferable. For example, plastic sheets made of fluororesins such as polytetrafluoroethylene (PTFE), polychlorotrifluoroethylene (PCTFE), polyvinylidene fluoride (PVDF), polyvinyl fluoride (PVF), perfluoroalkoxyfluororesin (PFA), tetrafluoroethylene hexafluoropropylene copolymer (FEP), ethylene tetrafluoroethylene copolymer (ETFE), ethylene chlorotrifluoroethylene copolymer (ECTFE) and the like, are preferable, a fluororesin sheet is particularly preferable, and a polytetrafluoroethylene (PTFE) sheet is especially preferable.

The thickness of the substrate film 4 is preferably 30 - 200 μm, more preferably 80 - 150 μm, to achieve good adhesion of a sealing sheet to an object to be sealed and improved detach workability for maintenance.

In addition, the surface of the substrate film 4 on the side of the adhesive layer 1 is preferably subjected to a corona treatment, a sputter treatment, a sodium treatment and the like for the improvement of adhesiveness between the adhesive layer 1 and the substrate sheet 4, and two or more of these surface treatments can be performed in combination.

When the part between the opposing two sealed objects is to be isolated from humidity and water (salt water), as shown in Fig. 5, sealing sheets 10, 11 of the present invention are interposed between the two sealed objects 20, 21. In this case, an embodiment wherein two sealed objects 20, 21 are pressed from the up and down directions to sandwich the sealing sheets 10, 11 between the opposing faces of the sealed objects 20, 21 may be employed. In this embodiment, when the sealing sheets 10, 11 have a substrate sheet 4 (see Figs. 1, 2), the sealing sheets 10, 11 can maintain a uniform shape, which enables sealing sheets 10, 11 to be uniformly adhered to the sealed objects 20, 21 for a long term, and superior seal performance to be maintained for a longer term.

When the sealing sheet of the present invention has a substrate sheet 4, an adhesion-imparting agent can be added to the adhesive layer 1 to increase the adhesiveness to the substrate sheet 4. Examples of the adhesion promoter include various silane coupling agents, epoxy resin and the like. Of these, silane coupling agents having a functional group such as an epoxy group, a methacryloyl group, a vinyl group and the like are preferable since they are effective for expression of adhesiveness. In addition, a catalyst for reacting a silyl group and an epoxy group can be added concurrently with a silane coupling agent and an epoxy resin. When a polyoxyalkylene adhesive (adhesive consisting of a cured product of a composition containing the above-mentioned components A - C) is used, such catalyst should be selected in consideration of the influence on the curing reaction (hydrosilylation reaction) to produce the adhesive.

When a polyoxyalkylenean adhesive (adhesive composed of a cured product of a composition containing the above-mentioned components A - C) is used as an adhesive, it may contain a storage stability improving agent to improve the storage stability. As the storage stability improving agent, a compound commonly known as a storage stabilizer for the component B of the present invention can be used without limitation. For example, a compound comprising an aliphatic unsaturated bond, an organic phosphorus compound, an organic sulfur compound, a nitrogen-containing compound, a tin compound, an organic peroxide and the like can be suitably used. Specifically, 2-benzothiazolyl sulfide, benzothiazole, thiazole, dimethylacetylene dicarboxylate, diethylacetylene dicarboxylate, 2,6-di-t-butyl-4-methylphenol, butylhydroxyanisole, vitamin E, 2-(4-morpholinyldithio)benzothiazole, 3-methyl-1-butene-3-ol, 2-methyl-3-butene-2-ol, organosiloxane containing an acetylenic unsaturated group, acetylene alcohol, 3-methyl-1-butyl-3-ol, diallyl fumarate, diallyl maleate, diethyl fumarate, diethyl maleate, dimethyl maleate, 2-pentenenitrile, 2,3-dichloropropene and the like can be included, but these are not to be construed as limitative.

In the sealing sheet of the present invention, the production method of the adhesive sheet 3 is not particularly limited, and a conventional production method of a double-faced adhesive sheet can be employed.

For example, for an adhesive sheet using an acrylic adhesive, for example, a method wherein a photopolymerizable composition containing a monomer for main skeleton of a base polymer, a copolymerizable monomer, a radical polymerization initiator, a crosslinking agent and the like is mixed with a flame retardant (when a flame retardant-containing adhesive layer is formed, a flame-retardant is further added to the composition), the mixture is applied to one surface of a core film to form a coated film with a given thickness, a release-treated surface of a release sheet is adhered thereon, and the resultant product is subjected to UV irradiation to allow a polymerization reaction to proceed, thereby forming

one flame retardant-containing adhesive layer 1, and further, the other flame retardant-containing adhesive layer 1 is formed on the other surface of the core film by a similar process can be employed. When the adhesive layer contains a tackifier resin and other additives, they can be mixed with the photopolymerizable composition together.

On the other hand, a method wherein a silicone adhesive (when a flame retardant-containing adhesive layer is formed, a flame-retardant is added to the silicone adhesive) is applied to one surface of a core film to form a coated film, a release-treated surface of a release sheet is adhered thereon, and the resultant product is subjected to given heat-drying, thereby forming one adhesive layer 1, and further, the other adhesive layer is formed on the other surface of the core film 2 by a similar process can be employed. When the adhesive layer contains a tackifier resin and other additives, they can be mixed with the silicone adhesive together.

A pressure-sensitive adhesive sheet, which uses an acrylic adhesive, and a pressure-sensitive adhesive sheet, which uses a silicone adhesive, can be produced by appropriately using a general release agent such as silicone release agent, fluorine release agent and the like for the detach treatment of a release sheet.

For example, an adhesive sheet using a polyoxyalkylene adhesive can be produced by the following method. First, the aforementioned components A - C (when flame retardant-containing adhesive layer is to be formed, the aforementioned components A - C and a flame-retardant (Component D)) are charged together with an organic solvent, where necessary, in a stirrer provided with a vacuum function, and the mixture is stirred in a vacuum state (in vacuo) for defoaming, whereby a defoamed mixture (composition) is prepared. When a tackifier resin and other additives are contained in a pressure-sensitive adhesive sheet, a tackifier resin and other additives are added together with the above-mentioned components A - C or components A - D to give a mixture (composition). Then, a composition (mixture) containing components A - C or components A - D is applied on the detach-treated surface of a release sheet to form a coated film with a desired thickness. The other surface of the core film is adhered thereto, and a given heat treatment is applied to cure the composition (mixture) containing components A - D. The curing reaction is completed since the alkenyl group of component A (polyoxyalkylene polymer having at least one alkenyl group in each molecule) is hydrosilylated by the hydrosilyl group (group having Si-H bond) of component B (compound containing two or more hydrosilyl groups on average in each molecule) in the presence of a hydrosilylation catalyst (component C) to allow crosslinking to proceed, whereby one adhesive layer can be formed. The other flame retardant-containing adhesive layer is formed on the other surface of the core film by a similar process.

The mixture can be applied to, for example, a commonly known coating apparatus such as a gravure coater; a roll coater such as a kiss coater or a comma coater; a die coater such as a slot coater or a fountain coater; a squeeze coater, a curtain coater and the like. Regarding the heat treatment conditions in this case, it is preferable that the composition be heated at 50 to 200°C (preferably 100 to 160°C) for about 0.01 to 24 hours (preferably 0.05 to 4 hours). While the defoaming time (i.e., stirring time in a vacuum state (in vacuo)) varies depending on the amount of the fluid to be treated, the solution temperature is generally maintained at 25°C and the solution is applied 48 - 96 hr later.

Release agent include silicone type release treatment agent, fluoride type release treatment agent, long chain alkyl type release treatment agent etc. can be applied to the support surface. Of these, a silicone type release treatment agent is preferable. As the curing method, a curing method such as UV irradiation, electron beam irradiation and the like are preferably used. Furthermore, of the silicone type release treatment agents, a cation polymerizable UV curing silicone type release treatment agent is preferable. A cation polymerizable UV curing silicone type release treatment agent is a mixture of a cation polymerizable silicone (polyorganosiloxane having an epoxy functional group in a molecule) and an onium salt photoinitiator. Such agent wherein the onium salt photoinitiator is a boron photoinitiator is particularly preferable. Using such a cation polymerizable UV curing silicone type release treatment agent wherein the onium salt photoinitiator is a boron photoinitiator, particularly good releaseability (mold releaseability) can be obtained. A cation polymerizable silicone (polyorganosiloxane having an epoxy functional group in a molecule) has at least two epoxy functional groups in one molecule, which may be linear or branched chain, or a mixture of these. While the kind of an epoxy functional group contained in polyorganosiloxane is not particularly limited, it only needs to permit progress of cationic ring-opening polymerization by an onium salt photoinitiator. Specific examples thereof include γ-glycidyloxypropyl group, β-(3,4-epoxycyclohexyl)ethyl group, β-(4-methyl-3,4-epoxycyclohexyl)propyl group and the like. Such cation polymerizable silicone (polyorganosiloxane having an epoxy functional group in a molecule) is marketed and a commercially available product can be used. For example, UV9315, UV9430, UV9300, TPR6500, TPR6501 and the like manufactured by Toshiba Silicone Co., Ltd., X-62-7622, X-62-7629, X-62-7655, X-62-7660, X-62-7634A and the like manufactured by Shin-Etsu Chemical Co., Ltd., Poly200, Poly201, RCA200, RCA250, RCA251 and the like manufactured by Arakawa Chemical Industries, Ltd.

Of the cationic polymerizable silicones, polyorganosiloxane comprising the following structural units (A) - (C) is particularly preferable.

(A) (B) (C)

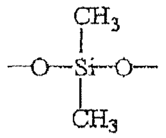 , 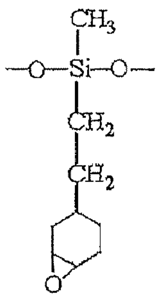 , 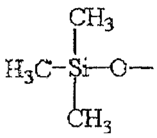

In polyorganosiloxane comprising such structural units (A) - (C), the composition ratio ((A):(B):(C)) of structural units (A) - (C) is particularly preferably 50 - 95:2 - 30:1 - 30 (mol%), and especially preferably 50 - 90:2 - 20:2 - 20 (mol%). Polyorganosiloxane comprising such structural units (A) - (C) is available as Poly200, Poly201, RCA200, X-62-7622, X-62-7629 and X-62-7660.

On the other hand, as the onium salt photoinitiator, a known product can be used without particular limitation. Specific examples include a compound represented by $(R^1)_2I^+X^-$, $ArN_2^+X^-$ or $(R^1)_3S^+X^-$ (wherein $R^1$ is alkyl group and/or aryl group, Ar is aryl group, $X^-$ is $[B(C_6H_5)_4]^-$, $[B(C_6F_5)_4]^-$, $[B(C_6H_4CF_3)_4]^-$, $[(C_6F_5)_2BF_2]^-$, $[C_6F_5BF_3]^-$, $[B(C_6H_3F_2)_4]^-$, $BF_4^-$, $PF_6^-$, $AsF_6^-$, $HSO_4^-$, $ClO_4^-$ and the like). Of these, a compound of the formula (boron photoinitiator) wherein $X^-$ is $[B(C_6H_5)_4]^-$, $[B(C_6F_5)_4]^-$, $[B(C_6H_4CF_3)_4]^-$, $[(C_6F_5)_2BF_2]^-$, $[C_6F_5BF_3]^-$, $[B(C_6H_3F_2)_4]^-$ or $BF_4^-$ is preferable, and a compound represented by $(R^1)_2I^+[B(C_6F_5)_4]^-$ (wherein $R^1$ is substituted or unsubstituted phenyl group) (alkyl iodonium, tetrakis(pentafluorophenyl)borate) is particularly preferable. As the onium salt photoinitiator, antimony (Sb) initiator is conventionally known. However, when an antimony (Sb) initiator is used, peel strength becomes heavier and peeling of transparent pressure-sensitive adhesive sheet from the release sheet tends to be difficult.

While the amount of the onium salt photoinitiator to be used is not particularly limited, it is preferably about 0.1 - 10 parts by weight relative to 100 parts by weight of the cationic polymerizable silicone (polyorganosiloxan) When the amount of use is smaller than 0.1 part by weight, curing of the silicone release layer may become insufficient. When the amount of use is greater than 10 parts by weight, the cost becomes impractical. When a cationic polymerizable silicone (polyorganosiloxan) and an onium salt photoinitiator are mixed, the onium salt photoinitiator may be dissolved or dispersed in an organic solvent and then mixed with polyorganosiloxan. Specific examples of the organic solvent include alcohol solvents such as isopropyl alcohol, n-butanol and the like; ketone solvents such as acetone, methylethyl ketone and the like; ester solvents such as ethyl acetate, and the like, and the like.

A detach treatment agent can be applied, for example, using a general coating apparatus such as those used for roll coater method, reverse coater method, doctor blade method and the like. While the coating amount (solid content) of the detach treatment agent is not particularly limited, it is generally about 0.05 - 6 $mg/cm^2$.

As a specific production method of the adhesive sheet 3, the method shown in the following Fig. 6 is preferable.

First, an adhesive layer 1 is formed on one surface of a substrate sheet 4, and a core film 2 is adhered to the adhesive layer 1 (Fig. 6(A)).

A release sheet 7 is prepared, and the adhesive layer 1 is formed on one surface of the release sheet 7 (Fig. 6(B)).

The adhesive layer 1 formed on one surface of the above-mentioned release sheet 7 is press adhered to one surface of the core film 2 (adhesive layer non-formed surface) (Fig. 6(C)). The press condition therefor is preferably about 0.5 - 5 $kgf/cm^2$.

The sealing sheet of the present invention is preferably preserved as a roll-shaped object (roll-shaped sealing sheet) 100, as shown in Fig. 7(A) and Fig. 7(B), before being adhered to the surface of a sealing object (sealed object). In this case, a substrate sheet 4 having a peel-treated back face (one surface on the opposite side from the flame retardant-containing adhesive sheet 5 of the substrate sheet 4) is used.

In the sealing sheet of the present invention, as shown in Fig. 5, when sealing sheets 10, 11 are interposed between two sealed objects 20, 21, the two sealed objects 20, 21 having sealing sheets 10, 11 interposed therebetween can be fixed by bolting.

The sealing sheet of the present invention is applied to, for example, a surface of an outer plate of aircraft, car, train and the like, a surface of a member inside aircraft, car, train and the like, which needs to have its surface isolated from humidity and water (salt water), a gap between two members in aircraft, car, train and the like, which is to be isolated from humidity and water (salt water), and the like.

The present invention is explained in more detail in the following by referring to Examples and Comparative Examples. The property evaluation (test) of the sealing sheet in the Examples and Comparative Examples was performed according to the following methods.

1. Water vapor transmission rate of core film

According to JIS Z 0208 temperature humidity conditions 40±0.5°C, 90±2%

2. Relaxation rate of core film

The above-mentioned method.

3. Level difference absorbability test

(1) A polymethyl methacrylate (PMMA) adherend 43, which is a rectangle having a flat plane size of 15 mm x 15 mm, with a 2 mm-high convex part 42 projecting on the surface of a base 41 is prepared (Fig. 10(A)).
(2) A sealing sheet is cut into a sample tape (width 10 mm, length 50 mm) and the sample S is adhered to an adherend 43 with a hand roller (Fig. 10(B)). That is, sample S is adhered to adherend 43 such that the sample S completely covers the convex part 42, and secures a measurement area (10 mm x 20 mm) A adjacent to one end of the convex part 42 (Fig. 10(C)).
(3) The area of peeled part G in the measurement area A (a part free of adhesion to surface of base 41) (=peeled area) was measured, the peeling rate (%) was calculated from the following formula, and a peeling rate of less than 40% was taken as a success.

$$\text{peeling rate (\%)} = (\text{peeling area}/10 \times 20) \times 100$$

4. Resistance to moisture permeation test

The water vapor transmission rate ($g/m^2 \cdot 24h$) of a sealing sheet was measured by a method according to JIS Z 0208 (temperature humidity conditions 40±0.5°C, 90±2%), and the resistance to moisture permeation of the sealing sheet was evaluated.
A water vapor transmission rate of less than 4.0 $g/m^2 \cdot 24h$ is a pass (O), and a water vapor transmission rate of not less than 4.0 $g/m^2 \cdot 24h$ was a failure (x).

Example 1

A thermosetting ordinary temperature liquid resin (manufactured by Kaneka Corporation, trade name "ACX022", 100 parts by weight) composed of terminus allylated polyoxypropylene wherein an allyl group is bonded to both ends of polypropylene glycol having an average molecular weight of about 28000 is mixed with a tackifier resin (rosin pentaerythritol, 20 parts by weight), and the mixture was heated to 100°C and stirred for 30 min. It was confirmed that the mixture is transparent and the tackifier resin is dissolved in the thermosetting ordinary temperature liquid resin. Thereto were added a curing catalyst (0.05 parts by weight) composed of a solution of platinum/1,3-divinyltetramethyldisiloxane complex in 2-propanol (complex concentration 3%, manufactured by N.E. CHEMCAT Corporation, trade name "3% Pt-VTS-IPA solution"), a curing agent (7.65 parts by weight) composed of a hydrogen siloxane compound (manufactured by Kaneka Corporation, trade name "CR500") having 5 hydrosilyl groups on average in a molecule, a flame retardant (ammonium polyphosphate (APP), 50 parts by weight), and tricresylphosphate (TCP) (30 parts by weight) and the mixture was mixed by stirring. Thereafter, static defoaming was performed to give a uniform composition.
The above-mentioned adhesive composition was applied to a 135 μm-thick PTFE sheet such that the thickness after a heat treatment was 400 μm, the sheet was heat-treated at 130°C for 10 min, and a 20 μm-thick polypropylene film was layered thereon to give the first adhesive sheet.
The above-mentioned adhesive composition was applied onto a peel-treated surface of a release sheet composed of a poly(ethylene terephthalate) film such that the thickness after a heat treatment was 400 μm. The sheet was heat-treated at 130°C for 10 min, and a peel-treated surface of a release sheet composed of a poly(ethylene terephthalate) was layered thereon to give the second adhesive sheet.
The release sheet of the second adhesive sheet was detached to expose the adhesive layer, and the adhesive layer was adhered to the first adhesive sheet (polypropylene film) to complete a sealing sheet.
In the same manner as in Example 1 except that a 25 μm-thick poly(ethylene terephthalate) film (relaxation rate 21.8%, tensile strength 185 N/10 mm) was used instead of the 20 μm-thick polypropylene film, a sealing sheet was

obtained.

Comparative Example 1

In the same manner as in Example 1 except that a 50 μm-thick poly(ethylene terephthalate) film (relaxation rate 0.2%, tensile strength 240 N/10 mm) was used instead of the 20 μm-thick polypropylene film, a sealing sheet was obtained.

Comparative Example 2

In the same manner as in Example 1 except that a 45 μm-thick polyvinyl chloride mesh (mesh opening diameter: 1.02, opening rate 40.4%) was used instead of the 20 μm-thick polypropylene film, a sealing sheet was obtained.

Comparative Example 3

In the same manner as in Example 1 except that a 30 μm-thick pulp 20 wt%-containing non-woven fabric (pulp 20 wt%, synthesis fiber 80 wt%, relaxation rate 19.4%, fineness: 1.5 denier, fabric weight: 14 g/cm$^2$) was used instead of the 20 μm-thick polypropylene film, a sealing sheet was obtained.

Each of the sealing sheets of Examples 1 and 2 and Comparative Examples 1 - 3 were subjected to the aforementioned tests. The results are shown in the following Table 1 together with the water vapor transmission rate and Relaxation rate of the core films used in Examples 1, 2, and Comparative Examples 1 - 3.

[Table 1]

| | | Comparative Example 1 | Comparative Example 2 | Comparative Example 3 | Example 1 | Example 2 |
|---|---|---|---|---|---|---|
| core film | | PET film | vinyl chloride mesh | pulp 20 wt%-containing non-woven fabric | PP film | PET film |
| thickness (μm) | | 50 | 45 | 30 | 20 | 25 |
| Relaxation rate (%) | | 0.9% | 36.0% | 19.8% | 21.8% | 10.4% |
| water vapor transmission rate (g/100 sq. in·24 hrs) | | 0.43 | not less than 7.5 | not less than 7.5 | 1.37 | 0.82 |
| adhesive layer | adhesive | polyoxy-alkylene | polyoxyalkylene | polyoxy-alkylene | polyoxy-alkylene | polyoxy-alkylene |
| | total thickness (pm) | 50 | 45 | 30 | 20 | 25 |
| sealing sheet level difference absorbability | | × | ○ | ○ | ○ | ○ |
| resistance to moisture permeation of sealing sheet | | ○ | × | × | ○ | ○ |

As is clear from Table 1, a sealing sheet simultaneously showing superior resistance to moisture permeation and level difference absorbability can be realized by using an adhesive sheet containing a core film having a particular water vapor transmission rate and a particular relaxation rate.

## Claims

1. A sealing sheet mainly composed of an adhesive sheet comprising a core film having a water vapor transmission rate of less than 7.5 g/100 sq. in 24 hr as measured by a method according to JIS Z 0208, and a Relaxation rate of not less than 10% as measured by the following bending-stress relaxation rate measurement test, and an adhesive layer formed on both surfaces of the core film:

[bending-stress relaxation rate measurement test]

(1) a core film is cut into a tape (width 20 mm, length 100 mm), the tape is rolled to form a loop with one surface thereof being inside, one end (10 mm) of the rolled tape is laid on top of the other and fixed with an adhesive tape to give a loop sample,
(2) the loop sample is put on a balance, and pressed with a flat plate surface of the jig such that the distance between the flat plate surface and the balance is 20 mm to deflect the loop sample, and
(3) from the start of pressing, the weight of the loop sample is measured by the balance, a ratio of the weight of the loop sample at 60 seconds from the start of pressing to the weight of the loop sample at 0 second therefrom is calculated based on the following calculation formula, and the obtained rate is taken as the relaxation rate.

$$\text{relaxation rate } (\%) = (1 - (F_{60} - W)/(F_0 - W)) \times 100$$

$F_0$: weight at 0 second from the start of pressing
$F_{60}$: weight at 60 seconds from the start of pressing
W: sample weight

**2.** The sealing sheet according to claim 1, wherein the core film is a plastic film.

**3.** The sealing sheet according to claim 1, wherein a substrate sheet is laminated on one surface of the adhesive sheet.

**4.** The sealing sheet according to claim 3, wherein the substrate sheet is a fluororesin sheet.

**5.** The sealing sheet according to claim 1, wherein the adhesive layer comprises a polyoxyalkylene adhesive.

**6.** The sealing sheet according to claim 1, wherein the adhesive layer is a flame retardant-containing adhesive layer.

**7.** The sealing sheet according to claim 6, wherein the flame retardant-containing adhesive layer is a cured product layer of a composition comprising the following components A - D.

A: a polyoxyalkylene polymer having at least one alkenyl group in one molecule
B: a compound containing two or more hydrosilyl groups on average in one molecule
C: a hydrosilylation catalyst
D: a flame retardant.

**8.** The sealing sheet according to claim 6, wherein the flame retardant is a halogen-free flame retardant.

**9.** The sealing sheet according to claim 8, wherein the halogen-free flame retardant is a phosphorus flame retardant.

**10.** The sealing sheet according to claim 1, wherein the adhesive layer comprises a tackifier resin.

FIG.1

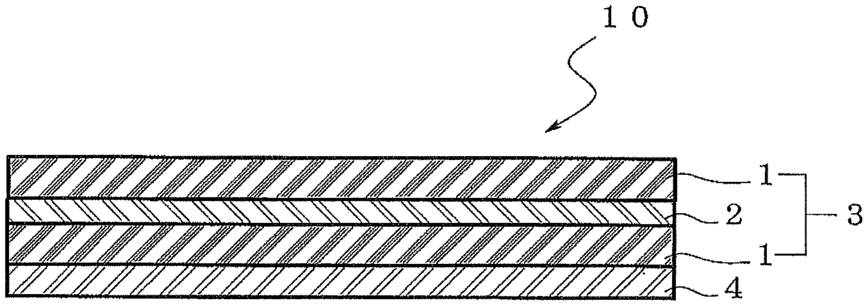


FIG.2

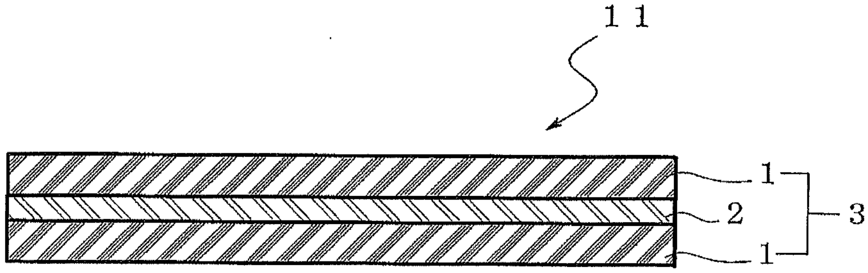


FIG.3

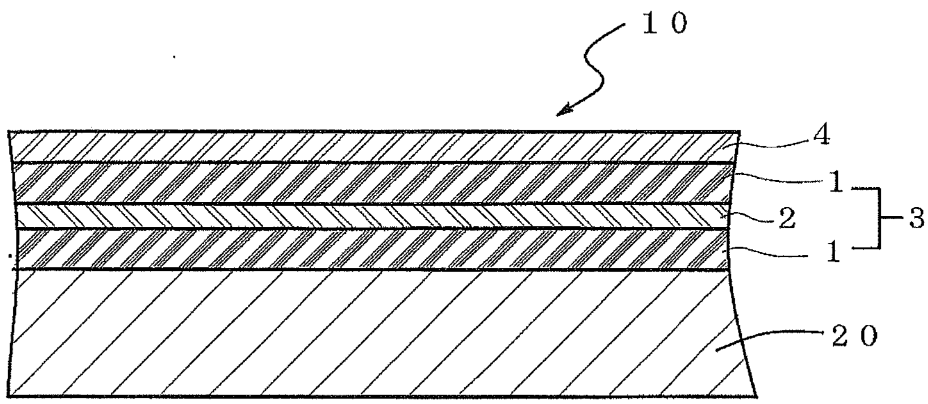

FIG.4

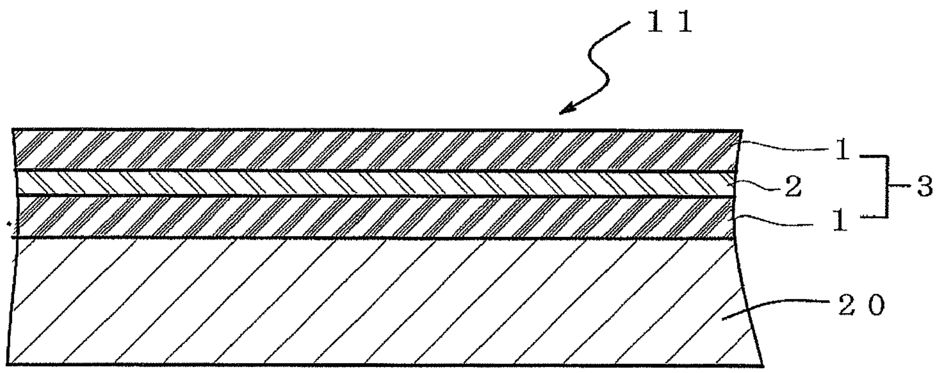


FIG.5

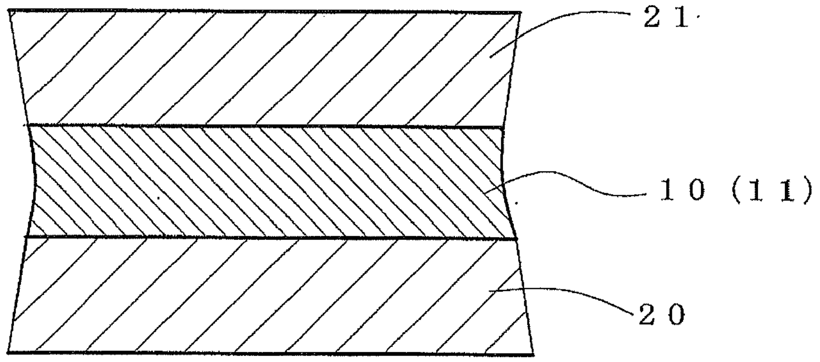

FIG. 6

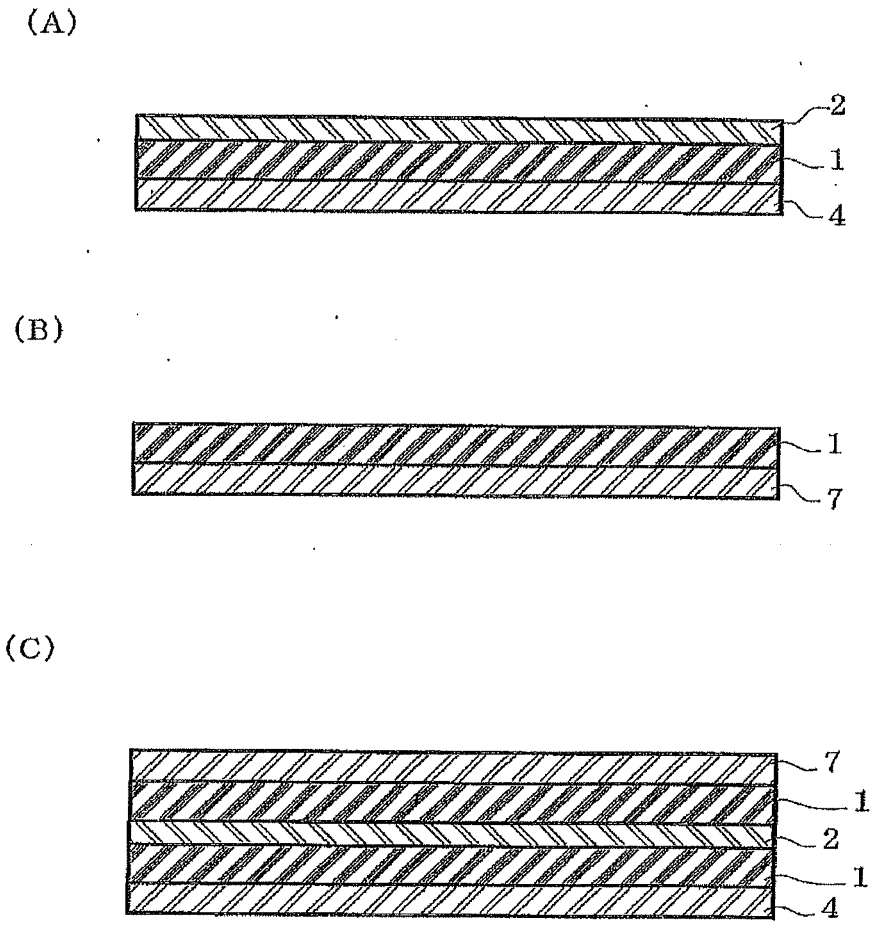

FIG. 7

(A)

(B)

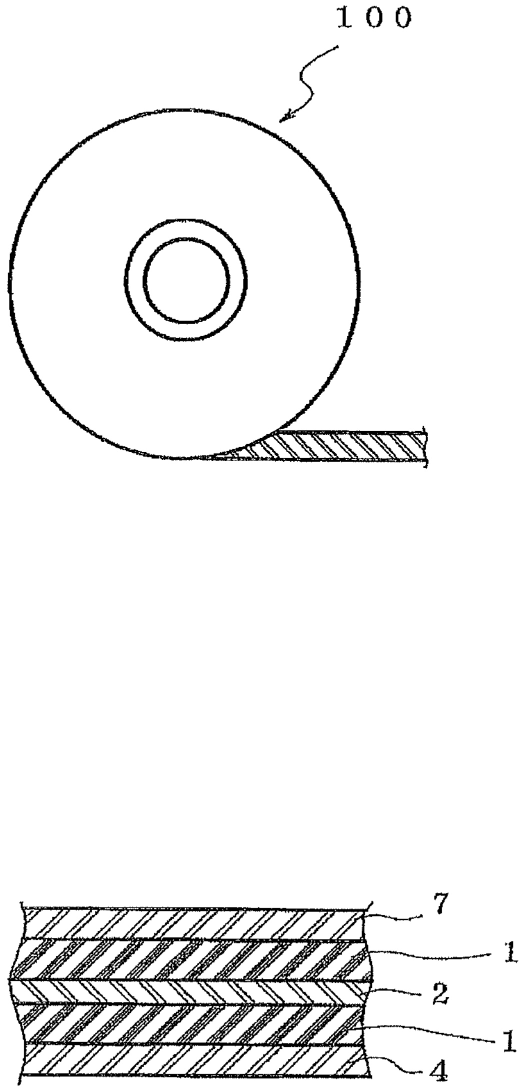

FIG.8

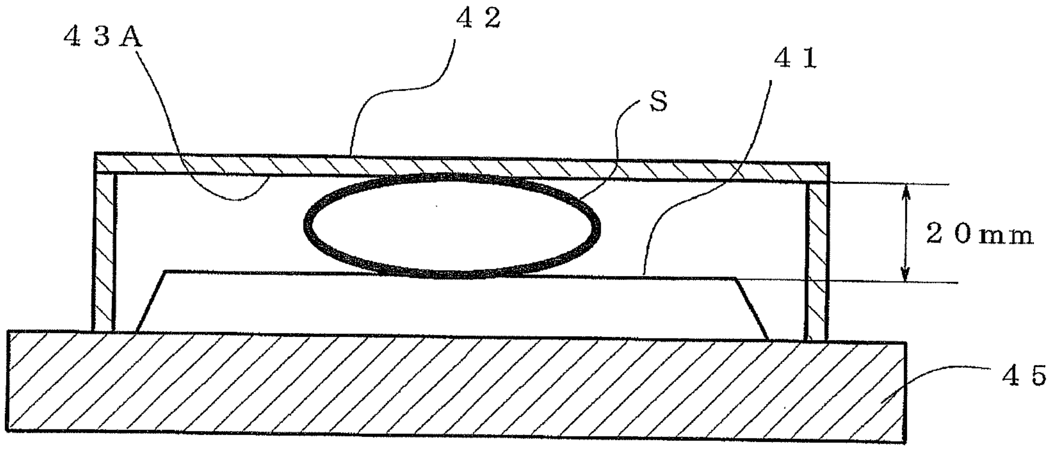


FIG.9

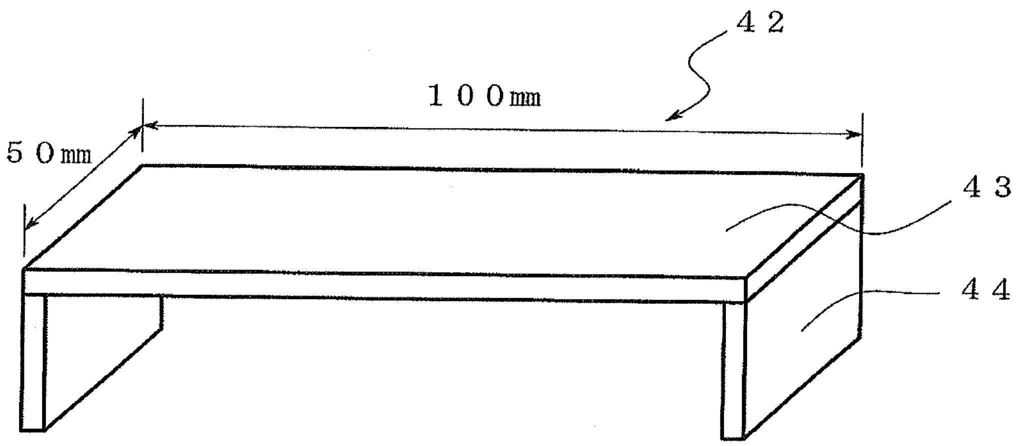

FIG.10

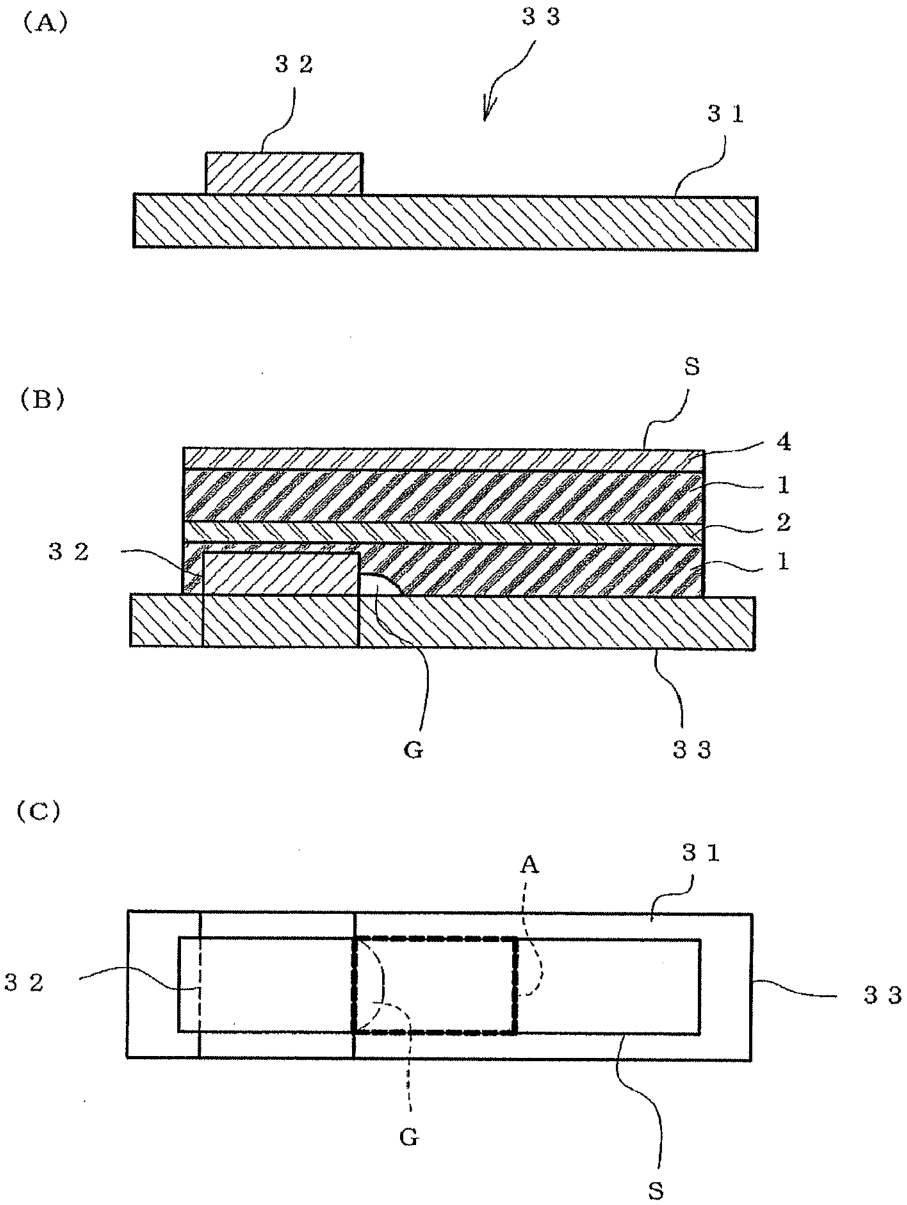

Europäisches Patentamt
European Patent Office
Office européen des brevets

# EUROPEAN SEARCH REPORT

Application Number
EP 13 19 8397

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 141 015 A2 (NITTO DENKO CORP [JP]) 6 January 2010 (2010-01-06) * paragraph [0010] * * paragraph [0059] - paragraph [0060] * * paragraph [0078]; example 2 * * claims 1, 4, 5 * ----- | 1,2,5,10 | INV. C09J7/02 B32B7/12 B32B27/08 F16J15/10 |
| X | EP 2 341 113 A2 (NITTO DENKO CORP [JP]) 6 July 2011 (2011-07-06) * paragraph [0008] * * paragraph [0105] - paragraph [0107] * * claims 1-3, 7-11 * ----- | 1-10 | |
| X,P | EP 2 541 104 A2 (NITTO DENKO CORP [JP]) 2 January 2013 (2013-01-02) * paragraph [0007] * * paragraph [0017] * * paragraph [0126] - paragraph [0129]; example 1 * * Comparative Example 1; paragraph [0132] * * Comparative Example 1 and Example 1; page 18; table 1 * * claims 1-3, 6-9 * ----- | 1-10 | TECHNICAL FIELDS SEARCHED (IPC) C09J B32B F16J |
| X,P | EP 2 541 105 A2 (NITTO DENKO CORP [JP]) 2 January 2013 (2013-01-02) * paragraph [0008] * * Examples 1-9; paragraph [0147] - paragraph [0160] * * Examples 1-9; page 22; table 1 * * claims 1, 2, 5-7, 9-10, 12, 13 * ----- | 1-10 | |

1

The present search report has been drawn up for all claims

| Place of search | Date of completion of the search | Examiner |
|---|---|---|
| Munich | 26 March 2014 | Siemsen, Beatrice |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 13 19 8397

This annex lists the patent family members relating to the patent documents cited in the above-mentioned European search report. The members are as contained in the European Patent Office EDP file on
The European Patent Office is in no way liable for these particulars which are merely given for the purpose of information.

26-03-2014

| Patent document cited in search report | Publication date | Patent family member(s) | Publication date |
|---|---|---|---|
| EP 2141015 A2 | 06-01-2010 | EP 2141015 A2 | 06-01-2010 |
| | | JP 5010642 B2 | 29-08-2012 |
| | | JP 2010013645 A | 21-01-2010 |
| | | US 2009322040 A1 | 31-12-2009 |
| EP 2341113 A2 | 06-07-2011 | EP 2341113 A2 | 06-07-2011 |
| | | JP 4995316 B2 | 08-08-2012 |
| | | JP 2011153706 A | 11-08-2011 |
| EP 2541104 A2 | 02-01-2013 | CN 102850950 A | 02-01-2013 |
| | | EP 2541104 A2 | 02-01-2013 |
| | | JP 2013010957 A | 17-01-2013 |
| | | US 2012326391 A1 | 27-12-2012 |
| EP 2541105 A2 | 02-01-2013 | CN 102850951 A | 02-01-2013 |
| | | EP 2541105 A2 | 02-01-2013 |
| | | JP 2013011348 A | 17-01-2013 |
| | | US 2013009365 A1 | 10-01-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20040070156 A1
- JP 2003292926 A
- US 3159601 A
- US 3159662 A, Ashby
- US 3220972 A, Lamoreaux